# EUROPEAN PATENT SPECIFICATION

(11) **EP 3 199 072 B1**
(45) Date of publication and mention of the grant of the patent: **16.08.2023**
(21) Application number: 16153021.7
(22) Date of filing: 27.01.2016
(51) Int. Cl.: A47J 31/36

(54) **A SYSTEM FOR PREPARING A LIQUID BEVERAGE FROM A CAPSULE, A CAPSULE CONFIGURED TO BE USED IN A SYSTEM**
SYSTEM ZUR HERSTELLUNG EINES FLÜSSIGEN GETRÄNKS AUS EINER KAPSEL, EINE ZUR VERWENDUNG IN EINEM SYSTEM KONFIGURIERTE KAPSEL
SYSTÈME POUR PRÉPARER UNE BOISSON LIQUIDE À PARTIR D'UNE CAPSULE, CAPSULE CONÇUE POUR ÊTRE UTILISÉE DANS UN SYSTÈME

(43) Date of publication of application: 02.08.2017
(73) Proprietor: Koninklijke Douwe Egberts B.V., 3532 AD Utrecht (NL)
(72) Inventor: van Loon-Post, Angenita Dorothea, 3532 AD Utrecht (NL); Kammerbeek, Ralf, 3532 AD Utrecht (NL); de Graaff, Gerbrand Kristiaan, 3532 AD Utrecht (NL)
(74) Representative: V.O.

(56) References cited:
- EP-A1- 1 967 099
- EP-A1- 2 412 646
- WO-A1-2010/128051
- WO-A1-2012/146470
- US-A1- 2007 144 355

## Description

The invention relates to a system for preparing a liquid beverage
from a capsule, said system comprising a device, the latter including:
- a feeding unit for feeding injection fluid into the capsule, wherein said liquid is provided by a pump of the device;
- a control unit for controlling at least the pump of the device;
- decoding means communicatively connected to the control unit and designed to read information from encoding means;
- said system further comprising a capsule holder and a capsule comprising an inlet surface, said capsule holder being configured to so as to receive and support the capsule;
- said capsule being configured to be housed in the capsule holder, said inlet surface being arranged for receiving injection liquid from the feeding unit;
- said feeding unit comprising an injection needle for supplying the injection fluid as a jet, said injection needle being able to move relative to the capsule holder from a rest position to an operating position;
- said capsule holder being detachable from the feeding unit and movable from an operating position in the feeding unit to a rest position outside the feeding unit;
- said feeding unit comprising insertion means which permits the insertion of the capsule holder from its detached position into its operating position in the feeding unit, said insertion means comprises ribs which are associated with guide grooves which are wedge-shaped;
- said capsule holder comprising complementary insertion means configured to permit the insertion of the capsule holder from its rest position into its operating position in the feeding unit, said complementary insertion means being complementary to the insertion means of the feeding unit, the
complementary insertion means of the capsule holder preferably comprising ribs associated with guide grooves, the complementary insertion means preferably being wedge-shaped, substantially linear guides means.

Such a system is known from EP-B1-1.967.100. The invention in particular relates to such systems marketed under the name Dolce Gusto ^{®} and at the present moment sold e.g. by Krups as espresso machines known as Dolce Gusto Genio, Dolce Gusto Picollo, Dolce Gusto Creativa, Dolce Gusto Circolo, Dolce Gusto Fontana and Dolce Gusto Melody. These machines can only operate properly when the system is equipped with a specifically configured capsule holder having encoding means which can be read by the decoding means of the device. Said specifically configured capsule holder comprises complementary insertion means having ribs associated with guide grooves which are wedge-shaped. The capsules to be used in these machines are specifically configured to be used in these machines only and are configured for the preparation of a beverage by injection of the injection liquid under pressure. The capsule comprises as inlet surface an injection surface in the form of a flexible membrane which is attached to an upper peripheral edge of the cup of the capsule. In operation position of the capsule in the specifically configured capsule holder and in operating position of the specifically configured capsule holder in the feeding unit the injection surface is punctured by the injection needle of the feeding unit. The capsule further comprises a closed chamber containing the extractable and/or soluble substance in which the injection of the injection fluid is carried out. Furthermore the capsule comprises opening means in the form of at least one puncturing element for opening the capsule under the effect of the rise in pressure in the chamber. The inclination formed by the wedge-shaped insertion means ensures that the injection surface of the capsule, once inserted in the operating position, is positioned with a few degrees of inclination relative to the horizontal. This inclination serves to reduce considerably, or even to eliminate, the occurrence of resurgence by keeping the capsule inclined and maintaining a volume of gas and/or air around the point of injection, which has the result that when removing the injection needle, a sufficient volume of gas and/or air escapes instead of pressurised liquid. Although customers using this system are quite satisfied with its operation, one of the main disadvantages experienced by customers is that only capsules which are specifically configured can be used in this known system. Document WO2012/146470 discloses a system as defined in the preamble of claim 1.

It is therefore an object of the present invention to meet the demands of the customers and to provide a system for preparing a liquid beverage from a capsule, in which the customers can use a large variety of capsules containing an extractable substance and/or a soluble substance without detriment to the operation of the device.

According to the invention this object or at least part of this object is achieved in that a system for preparing a liquid beverage from a capsule of the sort defined above is characterized in that, said system further comprises the features from the group consisting of:
- said capsule being configured so as to position its inlet surface when it is housed in the capsule holder in the operating position in a horizontal position; and
- said capsule being configured so as to position its inlet surface when it is housed in the capsule holder in the operating position at a position in which the inlet surface is free from contact with the injection needle when the latter is in the operating position, and the capsule inlet surface is concave and comprises one or a plurality of holes.

Consequently a customer is provided with the possibility of using an alternative capsule in e.g. the existing Dolce Gusto^{®} devices as mentioned above, in which in the operating position the capsule inlet surface is positioned horizontally and/or there is no contact between the inlet surface and the injection needle in the operating position.

In an embodiment of a system for preparing a liquid beverage from a capsule according to the invention, wherein said capsule comprises a cup defining an axial axis, the capsule inlet surface is inclined relative to the axial axis of the capsule such that the inlet surface when it is housed in the capsule holder is in a horizontal position when the capsule holder is in the operating position. In this embodiment thus also the existing capsules can be used. In case the capsule inlet surface is spaced from the upper peripheral surface in the direction towards the outlet face, thus forming a lowered capsule inlet surface, a capsule can be used which does not provide a seal (at least locally and directly) between the injection surface of the feeding unit and the inlet surface of the capsule. Consequently a capsule to be used in the device neither needs to be constructed so that the inlet surface of the capsule is pierced by the injection needle nor that the internal volume of the capsule is reduced by deforming the inlet surface of the capsule. A proper functioning of such a capsule in the device is then realized when the upper peripheral surface is used as sealing surface in the operating position of the capsule holder in the feeding unit. In another embodiment of a system for preparing a liquid beverage from a capsule according to the invention the capsule inlet surface is rigid, and thus the inlet surface needs not to be manufactured with a flexible membrane which is configured to hermetically seal the capsule during normal handling on the one hand and to be perforated by an injection needle on the other hand.

Preferably the capsule inlet surface and/or the outlet face are arranged to be opened manually, e.g. they can be formed by tearable or removable flexible or rigid elements.

In a still further embodiment of a system for preparing a liquid beverage from a capsule according to the invention wherein said capsule comprises an outlet face opposite the capsule inlet surface and a cup having an upper peripheral surface, the system comprises means for opening the outlet face of the capsule, said means being arranged for exerting an external force, such as a mechanical force or fluid pressure, on the outlet face of the capsule. In this manner capsules can be used which are not self opening under internal pressure or water filling, and thus also capsules can be used which are not provided with internal puncturing means. In addition since the system comprises the means for opening the outlet face of the capsule, the capsules can be manufactured at lower costs. Preferably the means for opening the outlet face of the capsule by external forces is arranged for providing an opening in the outlet face having a surface of at least 9 mm², preferable at least 12 mm², and most preferably of at least 15 mm². Thus the means for opening the outlet face upon opening of the capsule provide a large opening through which the extracted substance can flow, and consequently capsules can be used which are not configured to retain internal pressure in the capsule, as a result of which capsules to be used in the device can be manufactured at even lower costs. Preferably said means for opening the outlet face of the capsule can be removably positionable in the capsule holder. In an advantageous, relatively simple embodiment of a system for preparing a liquid beverage from a capsule according to the invention said means for opening the outlet face of the capsule by mechanical forces then has the general shape of a contoured plate comprising protrusions, such as pyramids and/or points, frustums of pyramids, stepped pyramids or frustums thereof.

An economical and relatively simple system for preparing a liquid beverage from a capsule according to the invention is realized when the capsule consists of the capsule inlet surface, a cup, the outlet face, and an extractable and/or soluble substance, preferably the outlet face of the capsule is formed by a valve. In this manner a capsule to be used in the system is not provided with internal means, such as a valve for selectively blocking the flow path from a (lower) face of the capsule to an outlet of the capsule and/or internal perforation means designed for opening the lower face under the influence of pressure, or filters. In addition a capsule to be used in the device is not provided with valve means which is arranged to co-operate with a wall of the capsule, and thus in this manner a capsule which are relatively cheap and easy to manufacture can be used in the device and system according to the invention.

Further features and advantages of the present invention will appear from reading the description which follows, provided by way of nonlimiting example and with reference to the accompanying drawings, in which:
Figure 1 is a general simplified view of a system for preparing a liquid beverage from a capsule according to the invention;
Figure 2 is a cross-sectional view along the longitudinal median axis of the feeding unit of a device of the system of Figure 1 showing the wedge-shaped insertion means;
Figure 3 is a perspective view of the feeding unit and the capsule holder arranged in the operating position
Figure 4 is a cross-sectional view of an embodiment of a capsule of the system in accordance with the invention in which the capsule inlet surface is inclined relative to the axial axis of the cup of the capsule;
Figure 5 is a cross-sectional view along the longitudinal median axis of the embodiment shown in Figure 3 in which a capsule as shown in Figure 4 is housed
Figure 6 is a cross-sectional view along the longitudinal median axis of an embodiment of the system according to the invention showing part of a capsule holder, a removable opening means and a capsule having a lowered inlet surface;
Figure 7 is a cross-sectional view partly in perspective of an embodiment of the system in accordance with the invention in which the capsule has a lowered inlet surface;
Figure 8 is a cross-sectional view partly in perspective of an alternative embodiment of the system in accordance with the invention in which the capsule has a lowered inlet surface; and
Figure 9 is a cross-sectional view partly in perspective of a further embodiment of the system in accordance with the invention in which the capsule has a concave inlet surface.

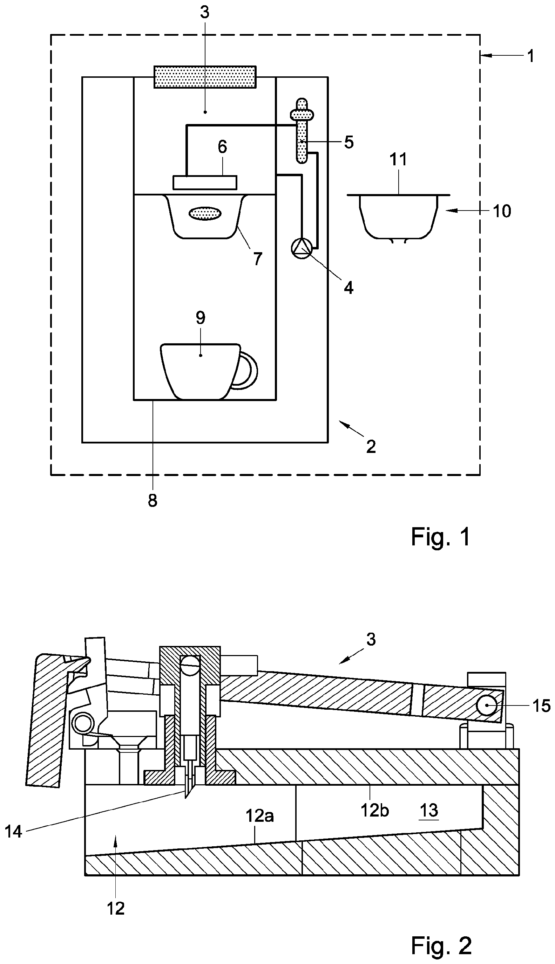

Figure 1 shows in simplified form a system 1 for preparing a liquid beverage from capsules comprising a device or an appliance 2 and capsules 10. The liquid may be a hot or cold beverage such as coffee, cappuccino or tea.

The device 2 includes a feeding unit 3 for feeding injection fluid into the capsule 10 when the capsule is positioned in the device 2. The liquid is provided by a pump 4 of the device 2. The device 2 further includes a control unit 5 for controlling at least the pump 4 of the device 2.

In addition decoding means 6 are present which are communicatively connected to the control unit 5 and which decoding means 6 are designed to read information from encoding means which are described later.

The system 1 further comprises a capsule holder 7 which is configured so as to receive and support the capsule 10. Furthermore the capsule holder 7 is detachable from the feeding unit 3 and is movable from an operating position within the feeding unit 3 to a rest position outside the feeding unit 3.

Under the capsule holder 7 a service zone is arranged which can comprise a platform 8 on which a cup 9 can be placed. The device 2 comprises, moreover, a water reservoir such as a removable reservoir, associated with the pump, a water heater and a fluid circuit permitting the fluid supply unit 3 to be supplied with hot and/or cold water according to requirements. A more or less sophisticated control means is present permitting the user to select according to e.g. a predetermined selective choice a plurality of options for hot and/or cold beverages and/or a plurality of volumes of beverages to be prepared. The control means may be associated with the control unit 5 which selectively controls the start-up of the pump 4, the water heater and valve(s) associated with the fluid circuit. The control means may be a means of the lever type or one or more control buttons. For the sake of clarity not all these components of the device have been indicated in Figure 1.

The capsule 10 of the system 1 comprises an inlet surface 11 and is configured to be housed in the capsule holder 7, such that the inlet surface 11 is arranged for receiving injection liquid from the feeding unit 3.

In Figure 2 a cross-sectional view along the longitudinal median axis of a part of the feeding unit 3 of the device 2 is shown, indicating wedge-shaped insertion means 12 enabling the insertion of the capsule holder 7 in the feeding unit 3 from its detached position into its operating or injection position in the feeding unit 3. The insertion means 12 comprises ribs 12a, 12b which are associated with guide grooves 13 which are wedge-shaped. In Figure 2 it can be seen that the feeding unit 3 comprises an injection needle 14 for supplying the injection fluid as a jet. The injection needle 14 is able to be moved relative to the capsule holder 7 from a rest position to an operating position, in the shown embodiment by rotation around the axis 15.

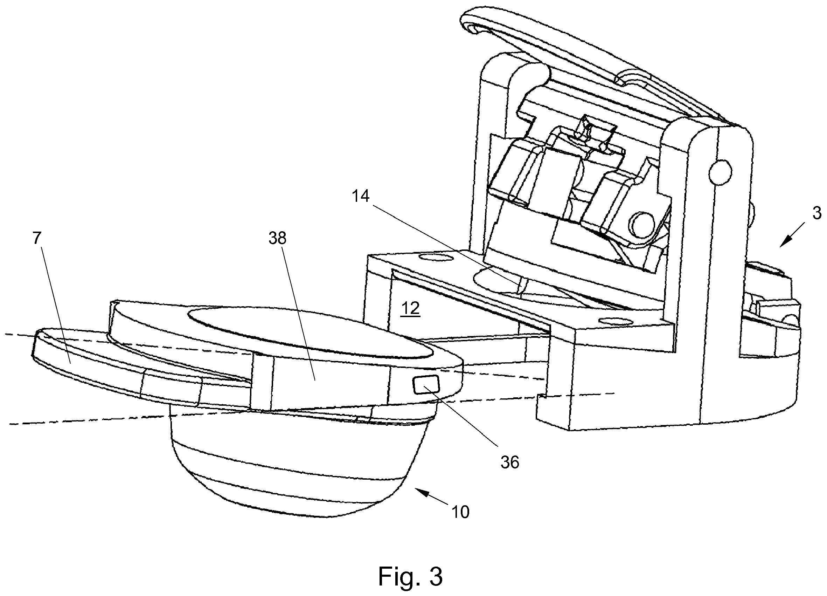

In Figure 3 the feeding unit 3 and the capsule holder 7 are shown in perspective. The capsule holder 7 is detachable from the feeding unit 3 and movable from an operating position in the feeding unit 3 to a rest position outside the feeding unit 3. The capsule holder 7 comprises complementary insertion means 38 which are configured to permit the insertion of the capsule holder 7 from its rest position into its operating position in the feeding unit 3. These complementary insertion means 38 are complementary to the insertion means 12 of the feeding unit 3, in particular the complementary insertion means of the capsule holder comprises ribs associated with guide grooves, which are wedge-shaped, substantially linear guides means. The capsule holder 7 further comprises encoding means 36, e.g. in the form of a magnet incorporated in the capsule holder 7, which in the operating position of the capsule holder 7 in the feeding unit 3 is able to be detected or read by the decoding means 6.

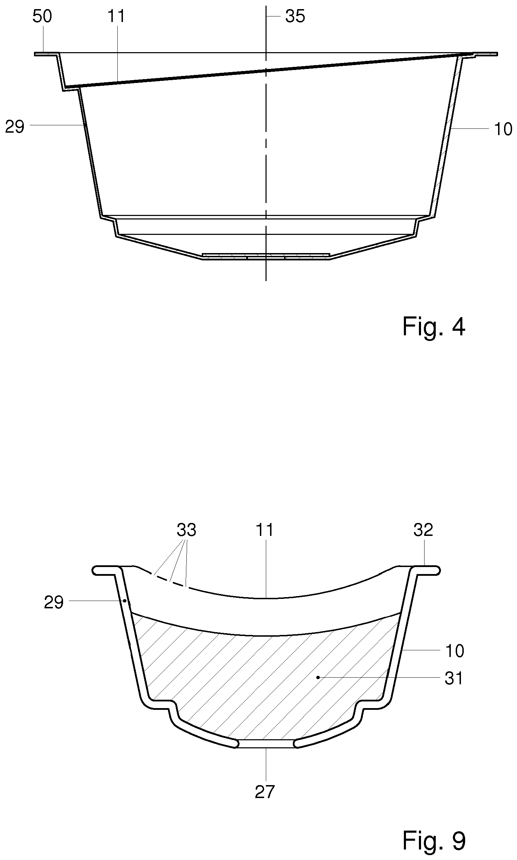

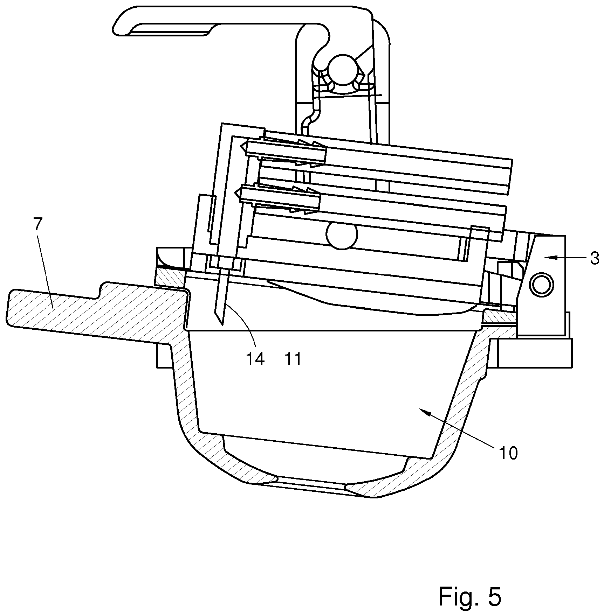

Although different kinds of capsules can be housed in the capsule holder 7, it is preferred that in an embodiment of a system in accordance with the invention a capsule 10 as shown in cross-section in Figure 4 is used. The cup 29 of this capsule 10 defines an axial axis 35 and the capsule inlet surface 11 is inclined relative to this axial axis 35 such that the inlet surface 11 when it is housed in the capsule holder 7 is in a horizontal position when the capsule holder 7 is in the operating position as is shown in Figure 5. Please note that the inclination deviates from 90°. Thus this capsule is configured so as to position its inlet surface 11 when it is housed in the capsule holder in the operating position in a horizontal position. In addition as can be seen in Figure 5 the inlet surface 11 of the capsule is free from contact with the injection needle 14 when in the operating position. Please note that in different not-shown embodiments of the invention the capsule can comprise only one of these features. In the embodiment shown in Figure 5 the capsule of Figure 4 is used and the flange 50 of this capsule 10 rest on an upper shoulder of the capsule holder and is clamped between a part of the feeding unit 3 and the capsule holder, for realizing a proper seal during injection of water under pressure. In case a smaller capsule is used of which the flange rest on the lower shoulder then a capsule holder can be used having an opening with a circumferential protruding edge, which opening is designed for receiving the smaller capsule and which circumferential edge has the same diameter as the capsule 10 of Figure 4 for providing a seal between the part of the feeding unit 3 and the capsule holder during operation. Alternatively the feeding unit can be provided with an additional ring or edge, e.g. movably arranged, for clamping the flange of the smaller capsule for realizing a proper seal.

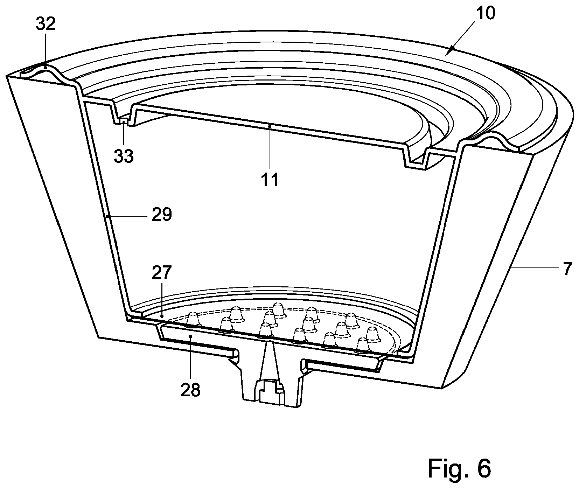

As indicated in the embodiments shown in Figures 6-9 the capsule 10 of the inventive system comprises an outlet face 27 opposite the capsule inlet surface 11 and a cup 29 having an upper peripheral surface. As is shown in Figure 6 the capsule holder 7 comprises means 28 for opening the outlet face 27 of the capsule by exerting an external force, such as a mechanical force or fluid pressure, on the outlet face 27 of the capsule 10. In the embodiment shown in Figure 6 said means 28 for opening the outlet face of the capsule is removably positionable in the capsule holder 7, and has the general shape of a contoured plate comprising protrusions, such as pyramids and/or points, frustums of pyramids, stepped pyramids or frustums thereof which extend towards the outlet face of the capsule. These means 28 are arranged for providing an opening in the outlet face having a surface of at least 9 mm², preferable at least 12 mm², and most preferably of at least 15 mm².

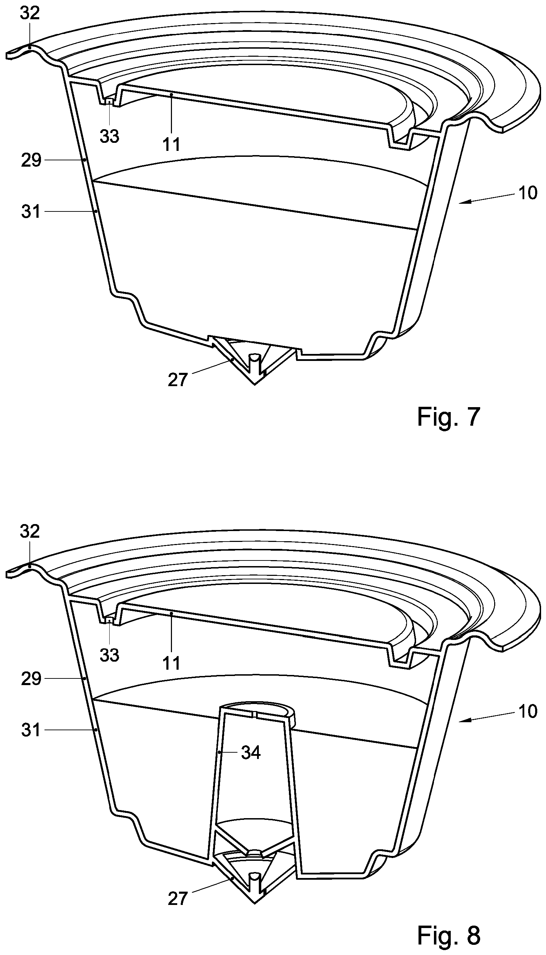

The capsule 10 shown in Figure 6 consists of the capsule inlet surface 11, the cup 29, the outlet face 27, and an extractable and/or soluble substance (for clarity reasons not depicted in Figure 6). This substance may be in the form of a liquid or in instant form. In Figures 7 - 9 which show alternative embodiments of the capsule 10 consisting of the capsule inlet surface 11, the cup 29, the outlet face 27, and an extractable and/or soluble substance this substance 31 is indicated.

As can be seen in the embodiments of Figures 6, 7 and 8 the capsule inlet surface 11 is spaced from an upper peripheral surface 32 of the capsule 10 in the direction towards the outlet face 27, thus forming a lowered capsule inlet surface 11. In this way the capsule 10 is configured so as to position its inlet surface 11 when it is housed in the capsule holder in the operating position at a position in which the inlet surface 11 is free from contact with the injection needle when the latter is in the operating position. In addition the upper peripheral surface 32 can be used as sealing surface in the operating position of the capsule holder in the feeding unit. In an alternative embodiment of a system in accordance with the invention shown in Figure 9 contact between the inlet surface 11 of the capsule 10 and the injection needle is prevented in that the capsule inlet surface 11 is concave.

In order to let liquid through to the interior of the capsules 10 shown in the embodiments of Figures 6 - 9 the inlet surface 11 comprises one or a plurality of holes 33. The holes 33 (only one hole is depicted but any number of holes can be arranged in different embodiments) in the embodiments shown in Figures 6 - 8 are arranged in an annular groove, which preferably is arranged such in the operating position of the capsule holder 7 in the feeding unit that it lies below the injection needle. The capsule inlet surface 11 of the embodiments of Figures 6 to 8 is rigid, whereas the inlet surface 11 of the embodiment shown in Figure 9 is flexible.

In the embodiments shown in Figures 7 and 8 the outlet face 27 of the capsule 10 is formed by a valve defining a relatively large outlet opening, in which in the embodiment shown in Figure 8 a central cone shaped element 34 is arranged above the valve.

In alternative (not-shown) embodiments the capsule inlet surface and/or the outlet face (or part thereof) can be arranged to be opened manually, e.g. by realizing them as tear away surfaces.

Especially interesting for the consumer is a kit of parts comprising a package and one or more of the following items contained in said package: a first plurality of capsules according to the invention, e.g. as shown in any of the Figures 4, 6 - 9; a separate or loose means 28 for opening the outlet face of a capsule by mechanical forces having the general shape of a contoured plate comprising protrusions, e.g. as shown in Figure 6.

## Claims

1. A system (1) for preparing a liquid beverage from a capsule (10), said system (1) comprising a device (2), the latter including:
- a feeding unit (3) for feeding injection fluid into the capsule (10), wherein said liquid is provided by a pump (4) of the device (2);
- a control unit (5) for controlling at least the pump (4) of the device (2);
- decoding means (6) communicatively connected to the control unit (5) and designed to read information from encoding means (36);
- said system (1) further comprising a capsule holder (7) and a capsule (10) comprising an inlet surface (11), said capsule holder (7) being configured to so as to receive and support the capsule (10);
- said capsule (10) being configured to be housed in the capsule holder (7), said inlet surface (11) being arranged for receiving injection liquid from the feeding unit (3);
- said feeding unit (3) comprising an injection needle (14) for supplying the injection fluid as a jet, said injection needle (14)being able to move relative to the capsule holder (7) from a rest position to an operating position;
- said capsule holder (7) being detachable from the feeding unit (3) and movable from an operating position in the feeding unit (3) to a rest position outside the feeding unit (3);
- said feeding unit (3) comprising insertion means (12) which permits the insertion of the capsule holder (7) from its detached position into its operating position in the feeding unit (3), said insertion means (12) comprises ribs (12a, 12b) which are associated with guide grooves (13) which are wedge-shaped;
- said capsule holder (7) comprising complementary insertion means (38) configured to permit the insertion of the capsule holder (7) from its rest position into its operating position in the feeding unit (3), said complementary insertion means (38) being complementary to the insertion means (12) of the feeding unit (3), the complementary insertion means (38) of the capsule holder (7) preferably comprising ribs associated with guide grooves, the complementary insertion means (38) preferably being wedge-shaped, substantially linear guides means,
said system (1) further comprising the features from the group consisting of:
- said capsule (10) being configured so as to position its inlet surface (11) when it is housed in the capsule holder (7) in the operating position in a horizontal position; and
- said capsule (10) being configured so as to position its inlet surface (11) when it is housed in the capsule holder (7) in the operating position at a position in which the inlet surface (11) is free from contact with the injection needle (14)when the latter is in the operating position, **characterized in that**, the capsule inlet surface (11) is concave and comprises one or a plurality of holes (33).

2. A system (1) for preparing a liquid beverage from a capsule (10) according to claim 1, wherein said capsule (10) comprises a cup (29) defining an axial axis (35), **characterized in that**, the capsule inlet surface (11) is inclined such relative to the axial axis (35) that the inlet surface (11) when it is housed in the capsule holder (7) is in a horizontal position when the capsule holder (7) is in the operating position.

3. A system (1) for preparing a liquid beverage from a capsule (10) according to claim 1 or 2, wherein said capsule (10) comprises an outlet face (27) opposite the capsule inlet surface (11) and a cup (29) having an upper peripheral edge, **characterized in that**, the capsule inlet surface (11) is spaced from the upper peripheral edge in the direction towards the outlet face (27), thus forming a lowered capsule inlet surface (11).

4. A system (1) for preparing a liquid beverage from a capsule (10) according to claims 2 and 3, **characterized in that**, the capsule (10) consists of the capsule inlet surface (11), the cup (29), the outlet face (27), and an extractable and/or soluble substance (31).

5. A system (1) for preparing a liquid beverage from a capsule (10) according to any one of the preceding claims, **characterized in that**, the capsule inlet surface (11) is rigid.

6. A system (1) for preparing a liquid beverage from a capsule (10) according to any one of the preceding claims, **characterized in that**, the capsule inlet surface (11) and/or the outlet face (27) are arranged to be opened manually.

7. A system (1) for preparing a liquid beverage from a capsule (10) according to any one of the preceding claims, wherein said capsule (10) comprises an outlet face (27) opposite the capsule inlet surface (11) and a cup (29) having an upper peripheral edge, **characterized in that**, the system (1) comprises means for opening the outlet face (27) of the capsule (10), said means being arranged for exerting an external force, such as a mechanical force or fluid pressure, on the outlet face (27) of the capsule (10), said means for opening the outlet face (27) of the capsule (10) preferably are removably positionable in the capsule holder (7).

8. A system (1) for preparing a liquid beverage from a capsule (10) according to claim 7, **characterized in that**, the means for opening the outlet face (27) of the capsule (10) by mechanical forces is arranged for providing an opening in the outlet face (27) having a surface of at least 9 mm², preferable at least 12 mm², and most preferably of at least 15 mm².

9. A system (1) for preparing a liquid beverage from a capsule (10) according to claim 7 or 8, **characterized in that**, the means for opening the outlet face (27) of the capsule (10) by mechanical forces has the general shape of a contoured plate comprising protrusions, such as pyramids and/or points, frustums of pyramids, stepped pyramids or frustums thereof.

10. A system (1) for preparing a liquid beverage from a capsule (10) according to any one of the preceding claims, wherein said capsule (10) comprises an outlet face (27) opposite the capsule inlet surface (11) and a cup (29) having an upper peripheral edge, **characterized in that**, the outlet face (27) of the capsule (10) is formed by a valve.

## Patentansprüche

1. System (1) zum Zubereiten eines flüssigen Getränks aus einer Kapsel (10), wobei das System (1) eine Vorrichtung (2) umfasst, wobei Letzteres beinhaltet:
- eine Zuführeinheit (3) zum Zuführen von Einspritzfluid in die Kapsel (10), wobei die Flüssigkeit durch eine Pumpe (4) der Vorrichtung (2) bereitgestellt wird;
- eine Steuereinheit (5) zum Steuern mindestens der Pumpe (4) der Vorrichtung (2);
- Decodiermittel (6), die mit der Steuereinheit (5) kommunikativ verbunden und ausgelegt sind, um Informationen von Codiermitteln (36) zu lesen;
- wobei das System (1) ferner einen Kapselhalter (7) und eine Kapsel (10) umfasst, die eine Einlassoberfläche (11) umfasst, wobei der Kapselhalter (7) konfiguriert ist, um die Kapsel (10) aufzunehmen und zu halten;
- wobei die Kapsel (10) konfiguriert ist, um in dem Kapselhalter (7) untergebracht zu werden, wobei die Einlassoberfläche (11) angeordnet ist, um Einspritzflüssigkeit von der Zuführeinheit (3) aufzunehmen;
- wobei die Zuführeinheit (3) eine Einspritznadel (14) zum Einspeisen des Einspritzfluids als einen Strahl umfasst, wobei die Einspritznadel (14) in der Lage ist, sich im Verhältnis zu dem Kapselhalter (7) aus einer Ruhestellung in eine Betriebsstellung zu bewegen;
- wobei der Kapselhalter (7) von der Zuführeinheit (3) lösbar und aus einer Betriebsstellung in der Zuführeinheit (3) in eine Ruhestellung außerhalb der Zuführeinheit (3) bewegbar ist;
- wobei die Zuführeinheit (3) Einführungsmittel (12) umfasst, die die Einführung des Kapselhalters (7) aus seiner gelösten Stellung in seine Betriebsstellung in der Zuführeinheit (3) ermöglichen, wobei die Einführungsmittel (12) Rippen (12a, 12b) umfassen, die mit Führungsnuten (13) versehen sind, die keilartig geformt sind;
- wobei der Kapselhalter (7) komplementäre Einführungsmittel (38) umfasst, die konfiguriert sind, um die Einführung des Kapselhalters (7) aus seiner Ruhestellung in seine Betriebsstellung in der Zuführeinheit (3) zu ermöglichen, wobei die komplementären Einführungsmittel (38) komplementär zu den Einführungsmitteln (12) der Zuführeinheit (3) sind, wobei die komplementären Einführungsmittel (38) des Kapselhalters (7) vorzugsweise Rippen umfassen, die Führungsrillen zugeordnet sind, wobei die komplementären Einführungsmittel (38) vorzugsweise keilförmige, im Wesentlichen lineare Führungsmittel sind,
wobei das System (1) ferner die Merkmale aus der Gruppe umfasst, bestehend aus:
- der Kapsel (10), die so konfiguriert ist, dass ihre Einlassoberfläche (11), wenn sie in der Betriebsstellung in dem Kapselhalter (7) untergebracht ist, in eine horizontale Stellung gestellt wird; und
- der Kapsel (10), die so konfiguriert ist, dass ihre Einlassoberfläche (11), wenn sie in der Betriebsstellung in dem Kapselhalter (7) untergebracht ist, in eine Stellung gestellt wird, in der die Einlassoberfläche (11) frei von Kontakt mit der Einspritznadel (14) ist, wenn sich letztere in der Betriebsstellung befindet, **dadurch gekennzeichnet, dass** die Kapseleinlassoberfläche (11) konkav ist und ein oder eine Vielzahl von Löchern (33) umfasst.

2. System (1) zum Zubereiten eines flüssigen Getränks aus einer Kapsel (10) nach Anspruch 1, wobei die Kapsel (10) einen Becher (29) umfasst, der eine axiale Achse (35) definiert, **dadurch gekennzeichnet, dass** die Kapseleinlassoberfläche (11) relativ zu der axialen Achse (35) derart geneigt ist, dass sich die Einlassoberfläche (11), wenn sie in dem Kapselhalter (7) untergebracht ist, in einer horizontalen Stellung befindet, wenn sich der Kapselhalter (7) in der Betriebsstellung befindet.

3. System (1) zum Zubereiten eines flüssigen Getränks aus einer Kapsel (10) nach Anspruch 1 oder 2, wobei die Kapsel (10) eine Auslassfläche (27) gegenüber der Kapseleinlassoberfläche (11) und einen Becher (29) mit einem oberen Umfangsrand umfasst, **dadurch gekennzeichnet, dass** die Kapseleinlassoberfläche (11) von dem oberen Umfangsrand in Richtung der Auslassfläche (27) beabstandet ist, wodurch eine abgesenkte Kapseleinlassoberfläche (11) gebildet wird.

4. System (1) zum Zubereiten eines flüssigen Getränks aus einer Kapsel (10) nach den Ansprüchen 2 und 3, **dadurch gekennzeichnet, dass** die Kapsel (10) aus der Kapseleinlassoberfläche (11), dem Becher (29), der Auslassfläche (27) und einer extrahierbaren und/oder löslichen Substanz (31) besteht.

5. System (1) zum Zubereiten eines flüssigen Getränks aus einer Kapsel (10) nach einem der vorstehenden Ansprüche, **dadurch gekennzeichnet, dass** die Kapseleinlassoberfläche (11) starr ist.

6. System (1) zum Zubereiten eines flüssigen Getränks aus einer Kapsel (10) nach einem der vorstehenden Ansprüche, **dadurch gekennzeichnet, dass** die Kapseleinlassoberfläche (11) und/oder die Auslassfläche (27) angeordnet sind, um manuell geöffnet zu werden.

7. System (1) zum Zubereiten eines flüssigen Getränks aus einer Kapsel (10) nach einem der vorstehenden Ansprüche, wobei die Kapsel (10) eine Auslassfläche (27) gegenüber der Kapseleinlassoberfläche (11) und einen Becher (29) mit einem oberen Umfangsrand umfasst, **dadurch gekennzeichnet, dass** das System (1) Mittel zum Öffnen der Auslassfläche (27) der Kapsel (10) umfasst, wobei die Mittel derart angeordnet sind, dass sie eine äußere Kraft, wie eine mechanische Kraft oder einen Fluiddruck, auf die Auslassfläche (27) der Kapsel (10) ausüben, wobei die Mittel zum Öffnen der Auslassfläche (27) der Kapsel (10) vorzugsweise herausnehmbar in den Kapselhalter (7) stellbar sind.

8. System (1) zum Zubereiten eines flüssigen Getränks aus einer Kapsel (10) nach Anspruch 7, **dadurch gekennzeichnet, dass** die Mittel zum Öffnen der Auslassfläche (27) der Kapsel (10) durch mechanische Kräfte angeordnet sind, um sie eine Öffnung in der Auslassfläche (27) mit einer Fläche von mindestens 9 mm², bevorzugt mindestens 12 mm² und am meisten bevorzugt von mindestens 15 mm² bereitzustellen.

9. System (1) zum Zubereiten eines flüssigen Getränks aus einer Kapsel (10) nach Anspruch 7 oder 8, **dadurch gekennzeichnet, dass** die Mittel zum Öffnen der Auslassfläche (27) der Kapsel (10) durch mechanische Kräfte die allgemeine Form einer konturierten Platte aufweisen, die Vorsprünge, wie Pyramiden und/oder Spitzen, Pyramidenstümpfe, gestufte Pyramiden oder deren Stümpfe umfasst.

10. System (1) zum Zubereiten eines flüssigen Getränks aus einer Kapsel (10) nach einem der vorstehenden Ansprüche, wobei die Kapsel (10) eine Auslassfläche (27) gegenüber der Kapseleinlassoberfläche (11) und einen Becher (29) mit einem oberen Umfangsrand umfasst, **dadurch gekennzeichnet, dass** die Auslassfläche (27) der Kapsel (10) durch ein Ventil gebildet wird.

## Revendications

1. Système (1) de préparation d'une boisson liquide à partir d'une capsule (10), ledit système (1) comprenant un dispositif (2), ce dernier incluant :
- une unité d'alimentation (3) pour introduire un liquide d'injection dans la capsule (10), ledit liquide étant fourni par une pompe (4) du dispositif (2) ;
- une unité de commande (5) pour commander au moins la pompe (4) du dispositif (2) ;
- un moyen de décodage (6) connecté de manière communicative à l'unité de commande (5) et conçu pour lire des informations à partir de moyens de codage (36) ;
- ledit système (1) comprenant en outre un support de capsule (7) et une capsule (10) comprenant une surface d'entrée (11), ledit support de capsule (7) étant conçu de façon à recevoir et supporter la capsule (10) ;
- ladite capsule (10) étant conçue pour être logée dans le support de capsule (7), ladite surface d'entrée (11) étant agencée pour recevoir un liquide d'injection provenant de l'unité d'alimentation (3) ;
- ladite unité d'alimentation (3) comprenant une aiguille d'injection (14) pour fournir le liquide d'injection sous la forme d'un jet, ladite aiguille d'injection (14) pouvant se déplacer par rapport au support de capsule (7) d'une position de repos à une position de fonctionnement ;
- ledit support de capsule (7) pouvant être détaché de l'unité d'alimentation (3) et déplacé d'une position de fonctionnement dans l'unité d'alimentation (3) à une position de repos à l'extérieur de l'unité d'alimentation (3) ;
- ladite unité d'alimentation (3) comprenant un moyen d'insertion (12) qui permet l'insertion du support de capsule (7) de sa position détachée à sa position de fonctionnement dans l'unité d'alimentation (3), ledit moyen d'insertion (12) comprenant des nervures (12a, 12b) qui sont associées à des rainures de guidage (13) en forme de coin ;
- ledit support de capsule (7) comprenant un moyen d'insertion complémentaire (38) configuré pour permettre l'insertion du support de capsule (7) de sa position de repos à sa position de fonctionnement dans l'unité d'alimentation (3), ledit moyen d'insertion complémentaire (38) étant complémentaire au moyen d'insertion (12) de l'unité d'alimentation (3), le moyen d'insertion complémentaire (38) du support de capsule (7) comprenant de préférence des nervures associées à des rainures de guidage, le moyen d'insertion complémentaire (38) étant de préférence un moyen de guidage en forme de coin, sensiblement linéaire,
ledit système (1) comprenant en outre les caractéristiques du groupe constitué de :
- ladite capsule (10) étant configurée de manière à positionner sa surface d'entrée (11) lorsqu'elle est logée dans le support de capsule (7) en position de fonctionnement dans une position horizontale ; et
- ladite capsule (10) étant configurée de manière à positionner sa surface d'entrée (11) lorsqu'elle est logée dans le support de capsule (7) en position de fonctionnement à une position dans laquelle la surface d'entrée (11) est dépourvue de contact avec l'aiguille d'injection (14) lorsque celle-ci est en position de fonctionnement, **caractérisée en ce que** la surface d'entrée de capsule (11) est concave et comprend un ou une pluralité de trous (33).

2. Système (1) pour la préparation d'une boisson liquide à partir d'une capsule (10) selon la revendication 1, dans lequel ladite capsule (10) comprend une coupelle (29) définissant un axe axial (35), **caractérisé en ce que** la surface d'entrée de capsule (11) est inclinée par rapport à l'axe axial (35) de telle sorte que la surface d'entrée (11), lorsqu'elle est logée dans le support de capsule (7), se trouve en position horizontale lorsque le support de capsule (7) est en position de fonctionnement.

3. Système (1) pour la préparation d'une boisson liquide à partir d'une capsule (10) selon la revendication 1 ou 2, dans lequel ladite capsule (10) comprend une face de sortie (27) opposée à la surface d'entrée de capsule (11) et une coupelle (29) ayant un bord périphérique supérieur, **caractérisé en ce que** la surface d'entrée de capsule (11) est espacée du bord périphérique supérieur en direction de la face de sortie (27), formant ainsi une surface d'entrée de capsule abaissée (11).

4. Système (1) pour la préparation d'une boisson liquide à partir d'une capsule (10) selon les revendications 2 et 3, **caractérisé en ce que** la capsule (10) est constituée de la surface d'entrée de capsule (11), de la coupelle (29), de la face de sortie (27) et d'une substance extractible et/ou soluble (31).

5. Système (1) pour la préparation d'une boisson liquide à partir d'une capsule (10) selon l'une quelconque des revendications précédentes, **caractérisé en ce que** la surface d'entrée de capsule (11) est rigide.

6. Système (1) pour la préparation d'une boisson liquide à partir d'une capsule (10) selon l'une quelconque des revendications précédentes, **caractérisé en ce que** la surface d'entrée de capsule (11) et/ou la face de sortie (27) sont agencées pour être ouvertes manuellement.

7. Système (1) pour la préparation d'une boisson liquide à partir d'une capsule (10) selon l'une quelconque des revendications précédentes, dans lequel ladite capsule (10) comprend une face de sortie (27) opposée à la surface d'entrée de capsule (11) et une coupelle (29) ayant un bord périphérique supérieur, **caractérisé en ce que** le système (1) comprend un moyen pour ouvrir la face de sortie (27) de la capsule (10), ledit moyen étant agencé pour exercer une force externe, telle qu'une force mécanique ou une pression de fluide, sur la face de sortie (27) de la capsule (10), ledit moyen pour ouvrir la face de sortie (27) de la capsule (10) pouvant être de préférence positionné de manière amovible dans le support de capsule (7).

8. Système (1) pour la préparation d'une boisson liquide à partir d'une capsule (10) selon la revendication 7, **caractérisé en ce que** le moyen pour ouvrir la face de sortie (27) de la capsule (10) par des forces mécaniques est agencé pour fournir une ouverture dans la face de sortie (27) ayant une surface d'au moins 9 mm², de préférence d'au moins 12 mm² et plus préférablement d'au moins 15 mm².

9. Système (1) pour la préparation d'une boisson liquide à partir d'une capsule (10) selon la revendication 7 ou 8, **caractérisé en ce que,** le moyen pour ouvrir la face de sortie (27) de la capsule (10) par des forces mécaniques a la forme générale d'une plaque profilée comprenant des parties saillantes, telles que des pyramides et/ou des pointes, des troncs de pyramides, des pyramides étagées ou des troncs de celles-ci.

10. Système (1) pour la préparation d'une boisson liquide à partir d'une capsule (10) selon l'une quelconque des revendications précédentes, dans lequel ladite capsule (10) comprend une face de sortie (27) opposée à la surface d'entrée de capsule (11) et une coupelle (29) ayant un bord périphérique supérieur, **caractérisé en ce que** la face de sortie (27) de la capsule (10) est formée par une vanne.
